Europäisches Patentamt

European Patent Office

Office européen des brevets

(11) Publication number: **0 406 560 A1**

# EUROPEAN PATENT APPLICATION

(21) Application number: **90110043.8**

(22) Date of filing: **28.05.90**

(51) Int. Cl.5: **B60Q 7/00**

(30) Priority: **01.06.89 IT 2117989 U**

(43) Date of publication of application:
**09.01.91 Bulletin 91/02**

(84) Designated Contracting States:
**AT BE CH DE DK ES FR GB GR LI LU NL SE**

(71) Applicant: **Vegezzi, Maurizio**
**Via Vittorio Emanuele, 5**
**I-20010 Pregnana Milanese (Milan)(IT)**

(72) Inventor: **Vegezzi, Maurizio**
**Via Vittorio Emanuele, 5**
**I-20010 Pregnana Milanese (Milan)(IT)**

(74) Representative: **Gervasi, Gemma et al**
**NOTARBARTOLO & GERVASI Srl Viale**
**Bianca Maria 33 33**
**I-20122 Milan(IT)**

(54) **Road triangle with intermittent luminose signaling.**

(57) Road triangle for intermittent luminous signaling comprising at least three light sources (2), one switch (3) and a container (4) in which there are one or more electrical power supply batteries, the intermittence being provided by an electronic device contained in said container or by a bimetallic system incorporated in said light sources or by LEDs.

fig 2

## ROAD TRIANGLE WITH INTERMITTENT LUMINOSE SIGNALING

The present invention relates to a road triangle with intermittent luminous signaling.

More specifically the present invention relates to a triangle to be used on roads and motorways by a stopped automobile driver with particular advantages compared with known triangles.

Known road triangles, which are used universally, have three sides made of reflex reflecting material and are illuminated by the headlights of the approaching automobile.

If visibility is poor, e.g. because of fog, etc., signaling by these triangles becomes inadequate and creates very dangerous situations. This functional shortcoming is overcome by a road triangle with intermittent luminous signaling in accordance with the present invention and characterized in that it comprises at least three light sources, a switch and a container in which there are one or more electrical power supply batteries, intermittence being produced by an electronical device contained in said container or by a bimetal electrical system incorporated in said light sources or by light emitting diodes (LED).

The characteristics and advantages of the triangle in accordance with the present invention are further illustrated in the following detailed description and drawings in which:

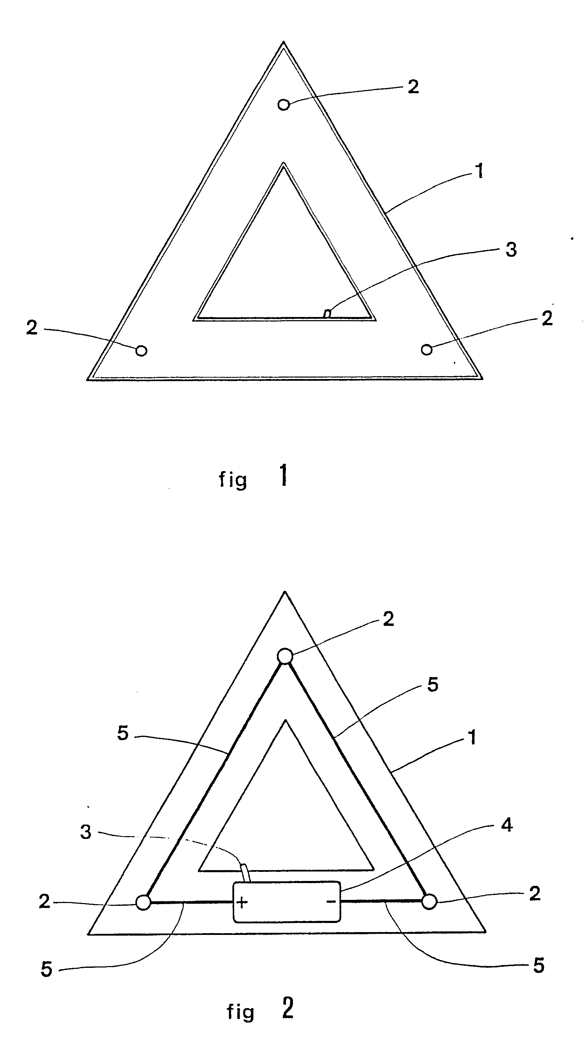

- Fig. 1 shows the front face of the road triangle according to the present invention;
- Fig. 2 shows the rear face of the same triangle.

With reference to the numerical symbols of said figures, 1 indicates the triangle as a whole and 2 indicates the three electric light bulbs or LEDs arranged at the three angles and 3 indicates the on-off switch.

In addition to the three electric light bulbs or LEDs arranged at the three angles, other electric light bulbs or LEDS may be arranged along the three sides. In all cases the electric light bulbs and LEDs are protected by a transparent synthetic material.

Reference number 4 indicates a container in boxlike or cylindrical form inside of which there are one or more electrical batteries and optionally an electronic device for intermittence and 5 indicates the electrical connection with the light sources.

The electronic device ensures steadiness of the voltage supply of the light source even if the batteries are almost exhausted and permits intermittent power supply of the light sources.

The container may also be in a single body with the triangle.

Intermittence of the light emitted has the great advantage of producing a very effective signal visible under poor conditions and immediately attracting the attention of the automobile driver.

In addition, the intermittence makes it possible to limit the consumption of energy and thus prolongs the life of the power supply batteries.

In the preferred embodiments light intermittence is regulated in such a manner that the light sources remain lit for a period of time from two to four times less than of the period of time they remain extinguished.

In a preferred embodiment one 9V battery is used for power supply of the three LEDs located at the angles of the triangle.

A larger number of lower voltage batteries connected in series may be used.

The electronic device is placed between the batteries and the LED power supply.

The light sources are supplied preferably by an intermittence which provides 0.22 seconds lit and 0.44 seconds extinguished.

The container 4 may be made of metallic material or synthetic resin. For example it may be made of iron or aluminium; olefinic, acrylic, or vinyl polymers; polycarbonates, polyester and others.

The triangle itself may be made of the above materials and in addition it may have the front of the three sides covered with reflex reflecting material.

## Claims

1. Road triangle for intermittent luminous signaling characterized in that it comprises at least three light sources (2), one switch (3) and a container (4) in which there are one or more electrical power supply batteries, the intermittence being provided by an electronic device contained in said container or by a bimetallic system incorporated in said light sources or by LEDs.

2. Triangle in accordance with claim 1 characterized in that said light sources are electric light bulbs or LEDs of which three are located at the angles of the triangle.

3. Triangle in accordance with claims 1 and 2 characterized in that other electric light bulbs or LEDs are arranged along the three sides of the triangle.

4. Triangle in accordance with claim 1 characterized in that said container has a boxlike or cylindrical form in which there are batteries and said electronic device.

5. Triangle in accordance with claim 1 characterized in that the intermittence of the light is regulated in such a manner that the light sources remain lit for a period of time from two to four times less than the period of time they remain extinguished.

fig 1

fig 2

4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-U-7139425 (FLEMMING)<br>* figure 1 * | 1-4 | B60Q7/00 |
| X | FR-A-2183436 (PONZIO ET PONZIO)<br>* the whole document * | 1, 2 | |
| A | | 4 | |
| X | FR-A-2221927 (PONZIO ET PONZIO)<br>* the whole document * | 1, 2 | |
| A | | 4 | |
| A | GB-A-2207231 (TOLTON)<br>* page 3, lines 20 - 23; figure 1 * | 2, 5 | |

| | | | TECHNICAL FIELDS SEARCHED (Int. Cl.5) |
|---|---|---|---|
| | | | B60Q |

The present search report has been drawn up for all claims

| Place of search | Date of completion of the search | Examiner |
|---|---|---|
| THE HAGUE | 03 AUGUST 1990 | ONILLON C.G.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)